# EUROPEAN PATENT SPECIFICATION

(11) **EP 1 701 921 B1**
(45) Date of publication and mention of the grant of the patent: **18.04.2012**
(21) Application number: 04802168.7
(22) Date of filing: 16.12.2004
(51) Int. Cl.: C02F 1/52

(54) **AN INSTALLATION FOR THE REMOVAL OF POLLUTANT MATERIALS AND/OR SUBSTANCES CONTAINED IN WATER STREAMS**
VORRICHTUNG ZUR ENTFERNUNG VON BELASTENDEN MATERIALEN UND/ODER SUBSTANZEN IN WASSERSTRÖMEN
INSTALLATION D'EXTRACTION DE MATERIAUX ET/OU SUBSTANCES POLLUANTES DE COURANTS D'EAU

(30) Priority: 19.12.2003 WO PCT/BR03/06256
(43) Date of publication of application: 20.09.2006
(73) Proprietor: de Oliveira Gomez, João Carlos, Barueri, CEP-06486 São Paulo, SP (BR)
(72) Inventor: de Oliveira Gomez, João Carlos, Barueri, CEP-06486 São Paulo, SP (BR)
(74) Representative: Hirsch & Associés
(86) International application number: PCT/BR2004/000247
(87) International publication number: WO 2005/058762

(56) References cited:
- BR-A- 9 702 430
- FR-A1- 2 552 133
- JP-A- 9 314 151
- US-A- 4 668 024

## Description

The present invention is directed to an installation for the removal of suspended organic matter present in polluted water streams, either caused by diffuse matter carried along by rain waters or non-treated effluents that are discharged into same, or yet by accidental spill of loads of pollutant products that might contact the water stream one way or another.

In a more specific way, the purpose of said installation is to carry out the process of removing pollutant materials and/or substances contained in water streams, object of Brazilian Patent PI9702430-9, dated 07/11/1997 that was granted to the same applicant hereof.

As mentioned in Brazilian Patent PI9702430-9, the pollution of water streams and the deterioration of the environment we can find in great urban centers is a phenomenon of the modem civilization. The formation, development and demographic growth create and aggravate the sanitary problems that could solved more easily and at lower costs in small urban centers through the implantation of individual systems, or even small collecting systems.

However, the solutions pointed out for individual systems cannot be applied in large populated centers because the availability of areas in urban lots and the capacity of sanitary deposition are not enough in view of the huge load of liquid and solid waste that is generated therein.

The sanitary deposition of an excess volume of both said residues and directly discharged waste waters into water streams prevents the occurrence of the so-called auto-purification phnomenon, the result of which is that the rivers, lakes and reservoirs of great urban centers are transformed into actual outdoor sewerage.

High investments on a public sewerage are required so that this process of environment deterioration can be efficiently reverted, in order to allow a fast safe removal of waste waters, dejects and liquid waste deriving from human activities, as well as to carry out the treatment of all the removed material.

Indeed, mainly in the developing countries, the required resources for the implantation of an efficient sanitation system are not enough, by virtue of the fast growth of the urban centers.

For the purpose of providing, both economically and dynamically, improved sanitary conditions of the populations affected by such problems, the present invention is related to the implantation of a system that, by eliminating the pollution caused by domestic and/or industrial wastes that are present in the water streams themselves, makes it possible: a) to eliminate the aspects offensive to the aesthetic sense, as well as to get rid of fetid odors; b) to exploit the water resources so that they can be reused in the future; c) to use urban water streams for recreational and sports purposes; e d) to prevent the natural water resources from being extremely polluted and keep same in conditions of extensive use.

The proposed system does not fulfill the needs of sewer collection and transportation but in regions where there is not an efficient sewer collecting network it makes it possible to retain the wastes and remove same to the treatment sites, thus preventing the deterioration thereof along the water stream and consequently the deterioration of the water stream itself.

An object of the present invention is to provide an installation for the removal of pollutant materials and/or substances contained in water streams that does require the construction of works in order to define a tank for the treatment of the polluted water from a water stream.

Another object of the present invention is to provide an installation for the removal of pollutant materials and/or substances contained in water streams that can be adapted to any type of water stream.

Another object of the present invention is to provide an installation for the removal of pollutant materials and/or substances contained in water streams, the implantation of which is easy and fast, only requiring a few adaptations in the portion of the water stream it is to be installed.

These and other objects and advantages of the present invention are attained by an installation for the removal of pollutant materials and/or substances contained in water streams that comprises the sequential implantation of: a line of air diffusers disposed on the bottom of the water stream and transversal thereto, thus simultaneously promoting the aeration and the revolving of the water stream.as well as the flotation of the coarse residues that are dragged and then collected downstream by a floating waste collecting net, said net being disposed transversal to the water stream and retaining the coarse residues present in the water stream; a suspended metallic structure transversal to the water stream disposed downstream and at a certain distance from said waste collecting net over which at least three automatically actuated selective injection curtains are mounted spaced apart and sandwiched between homogenization diffusers, the first of said curtains being responsible for the Injection of coagulants; the second curtain being responsible for the injection of polymers on the water stream to be treated so that a flocculation portion can be created in said water stream, in such a way that the suspended particles are aggregated downstream, thus defining flakes of larger sizes; said flocculation portion being subjected to the third injection curtain responsible for the micro-aeration, such aggregated larger sized particles being subjected to at least a stage of release of air micro-bubbles, causing such aggregated particles to float; thus allowing said flotation portion to be present along the water stream in such a way that a surface agglomeration of floated material takes place downstream and said floated material is carried along by longitudinal flexible barriers comprised of synthetic membranes so that it can be transversely aligned by being dragged, which material is comprised of a plurality of dragging modules that extend all over the width of the water stream, thus promoting the concentration of said floated material and the removal thereof to an intake box, thus making it possible to pump the material removed from the water stream to a restricted area remote from the water stream, wherein it is temporarily stored to be dehydrated and recycled as a by-product later on, depending on the composition thereof.

Preferred embodiments comprise one or more of the following features:
- the line of air diffusers is comprised of a submerged perforated pipe disposed transversal to the polluted water stream, said submerged pipe extending from one bank to the other of said water stream, thus providing over the whole extension thereof a plurality of ejecting nozzles responsible for the controlled outlet of the pressurized air coming from a compressed air tank existing on the banks of the water stream;
- the floating net, called waste collecting net, has a length that is higher than the width of the water stream, being flexibly extended between the banks of this later, thus allowing for the formation of an arched belt on the surface of the water stream for retaining and carrying coarse residues to one of the banks of said water stream wherein such residues or dejects are removed from the water stream; said floating net also serving as a passageway for the installation operators to cross from a bank to another over the water stream;
- the suspended metallic structure is comprised of a plurality of upright beams rigidly mounted on vertical columns rigidly disposed or movable along the dry portion of the banks of said water stream; said suspended structure having each upright beam supported between the respective vertical columns by means of tensioning cables that are anchored to rigid masonry blocks provided on the edges of the water stream, In such a way that said beam remains parallel to the surface of the water stream and at a height not to prevent the passage of boats having a size consistent with the navigability of the water stream;
- the suspended structure is of the mobile type through the provision of casters disposed at the base of the vertical columns that slide on guide tracks provided longitudinally beside the dry portion of the banks of the water stream, for making it possible to regulate the distances between the injection line mounted on the suspended structures;
- each of the beams defines a passageway on which a corresponding curtain of injection is mounted that is comprised of a set of injection pumps, relief valves and extensible flexible hoses and rising assemblies, said hoses being selectively displaced downward until its lower end or outlet reaches the bottom of the water stream;
- a manually operated or automatic roller follower that, by means of steel handles, selectively moves each injection line up and down;
- the transversal dragging alignment that is comprised of a plurality of dragging modules connected to one another and retained on the banks of the water stream through steel handles is provided with rotating drags that carry the mud to the respective intake boxes of the aligned dragging modules which are connected to one another by a suction pipe that pumps the mud removed or dragged from the water stream to the restricted area remote from water stream; and
- a pump assembly is provided downstream the transversal dragging alignment for pumping a volume of unpolluted water to the micro-aeration assembly that is used to supply the third micro-aeration curtain of the installation.

The present invention will be described below with reference to the accompanying drawings, given as an example without any limiting purpose, wherein:
Figure 1 represents a partial schematic view of a portion of a water stream, wherein the installation for the removal of suspended pollutants present in said water stream is mounted;
Figure 2 represents a partial schematic transversally cut view of the suspended metallic structure that comprises the installation for the removal of the suspended matter present in polluted water streams, the line of air diffusers being shown more emphatically:
Figure 3 represents a magnified detailed longitudinal view of a portion of the suspended metallic structure that comprises the installation for the removal of suspended pollutants present in water streams;
Figure 4 represents a magnified view of the portion of the metallic structure, taken according detail "A" of Figure 3;
Figure 5 represents a front view of the portion of the aligned dragging modules that are disposed transversal to the water stream and comprise the installation object of the present invention; e
Figure 6 represents a plan view of a portion of the aligned dragging modules, as shown in the previous figure.

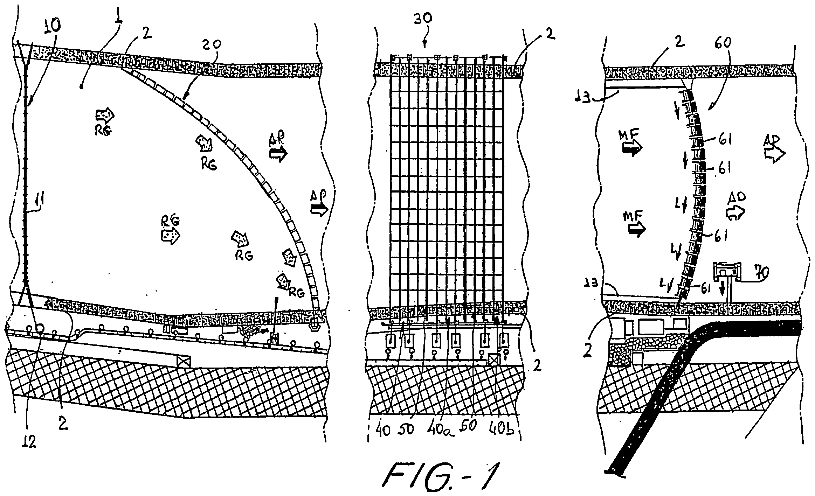

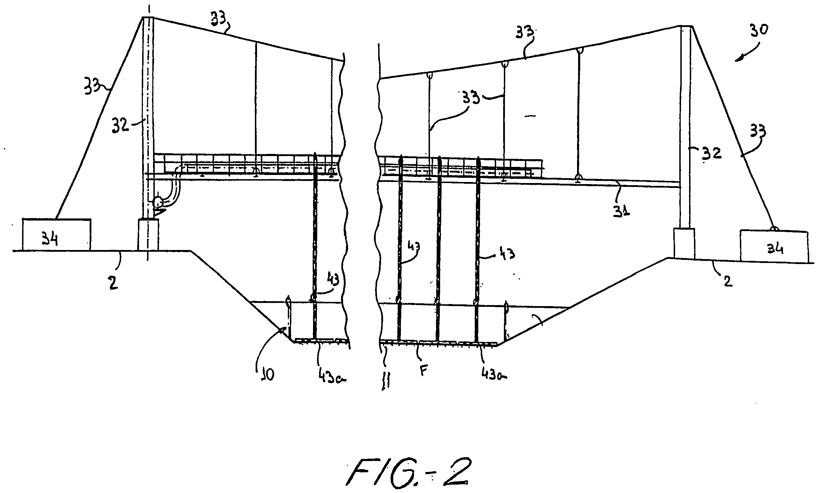

In accordance with these illustrations, the installation for the removal of pollutant materials and/or substances contained in water streams object of the present invention is comprised of a line of air diffusers 10 comprised of a submerged perforated pipe 11, see figure 2, disposed transversal to the polluted water stream that can be either natural or canalized, hereinafter simply called water stream 1, said submerged pipe 11 extending from one bank 2 to the other bank of water stream 1, provided along the whole extension thereof with a plurality of ejecting nozzles, not shown, that are responsible for the controlled output of the air coming from an air blower 12 disposed on the banks 2 of the water course 1, see figure 1.

This installation comprises the provision of a floating net 20, herein called the waste collecting net, the length of which is higher than the width of the water stream 1 and is flexibly extended between the banks 2 of the latter, in order to allow for the formation of an arched belt on the surface of the water stream 1, thus making it easy to retain and carry the coarse residues, such as bottles, plastic, paper and other materials on to one of the banks 2 of the water stream 1 so that such residues or dejects are removed from the water stream 1. Said floating net 20 also can be used as a service passageway for the installation operators to cross from a bank 2 to another over the water stream 1.

The arrows in Figure 1 show the water stream with coarse residues RG and already without any of said coarse residues, but the water is still polluted, the flow of which being designated by arrow AP.

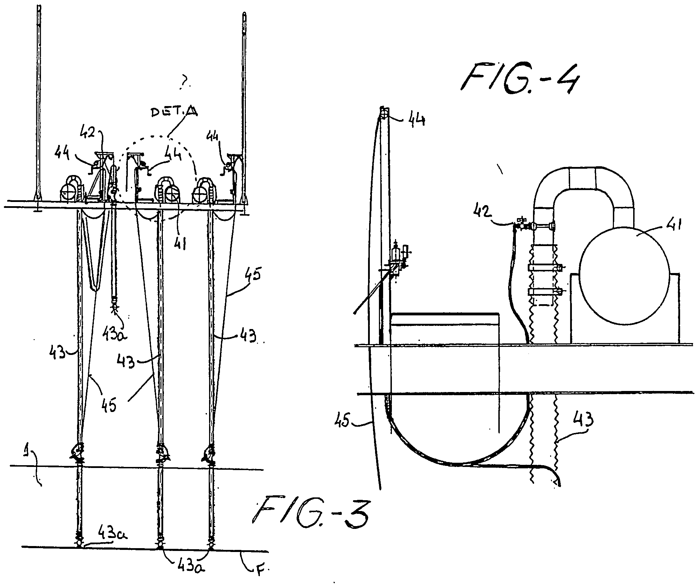

Downstream the water stream 1, the installation is also provided with a huge suspended metallic structure 30 comprised of a plurality of upright beams 31 rigidly mounted on vertical columns 32 rigidly disposed or movable along the dry portion of the banks 2 of said water stream 1. Said suspended structure 30, as shown in figures 1, 2, 3 and 4, has each upright beam 31 supported between the respective vertical columns 32 by means of tensioning cables 33 anchored to rigid concrete blocks 34 provided on the banks of the water stream 1, in such a way that said beam 31 remains parallel to the surface of the water stream 1 and at a height enough not to prevent the passage of boats having a size consistent with the navigability of the water stream 1. Although not shown, in the event the suspended structure 30 is of the mobile type, this can be attained by providing casters at the base of the vertical columns 32 that slide on guide rails disposed longitudinally beside the dry portion of the banks 2 of the water stream 1, thus making it possible to regulate the distances between the injection lines 40, 40a, 40b mounted on the suspended structures 30 to be described below.

Each of beams 31 define a passageway on which a corresponding curtain of injection 40 or 40a or 40b is mounted that is comprised of a set of injection pumps 41, relief valves 42 and extensible flexible hoses 43 that are selectively displaced downward until its lower end or outlet 43a reaches the bottom F of the water stream 1, see figure 2, in such a way that each curtain 40, 40a, 40b can act as a transversal automatically actuated selective injection line, said curtains 40, 40a, 40b being spaced apart and sandwiched between homogenization diffuser assemblies 50 that also extend selectively as far as the bottom F of the water stream 1. The lifting and lowering of each injection line 43 that comprises the curtain 40, 40a, 40b are defined by a manually operated or automatic roller follower 44 that, by means of steel cables 45, selectively moves said injection line 43 up and down.

In accordance with figure 1, sequentially a first injection curtain 40 is responsible for the injection of coagulants on the bottom of the bed of the water stream 1, a second injection curtain 40a is responsible for the injection of polymers in the water stream to be treated, so that from said portion along the water stream 1 on there is a flocculation length, in such a way that such suspended particles can aggregate downstream the water stream 1, defining larger sized flakes. The water stream 1 is then subjected to a third injection curtain 40b responsible for the injection of micro-bubbles, wherein water jets with air micro-bubbles are launched onto the bottom of the water stream 1 by tubular hoses, thus submitting said aggregated particles and those of larger sizes that may come up downstream the water stream 1, what shall cause such aggregated particles to float. Thus, from this point on there is a flotation length in the water stream, designated by arrows MF (floated material) shown in figure 1.

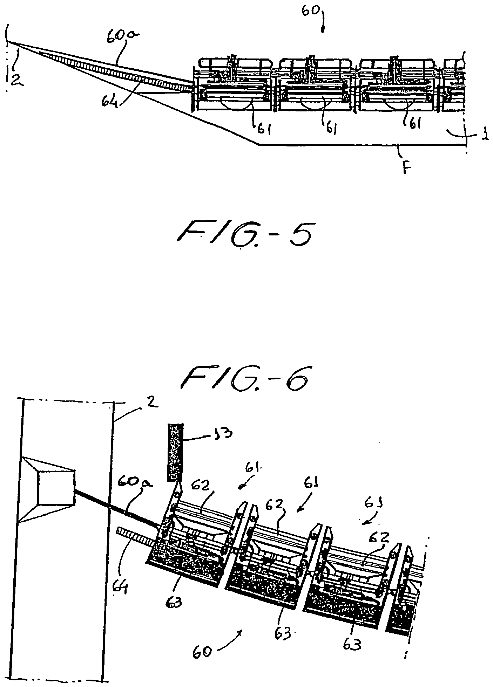

After the installation object of the present invention is completed, a transversal dragging alignment 60 is provided after the flotation length MF, which alignment is comprised of a plurality, of dragging modules 61 connected to one another that extend all over the width of the water stream 1, said alignment being retained on the banks 2 of the water stream 1 by steel cables 60a, thus promoting a concentration of floated material MF which is removed by rotating drags 62 to an intake box 63, see figures 5 and 6. All the intake boxes 63 of the aligned dragging modules 61 are connected to one another by a suction pipe 64 that pumps the mud L removed or dragged from the water stream 1 to a restricted area remote from the water stream 1, wherein it is temporarily stored to be dehydrated and recycled as by-product later on, depending on the composition thereof.

Thus, the water downstream the transversal dragging alignment 60 is a non-polluted water designated by arrows AD in figure 1 which is partially pumped from about 5 to 20% of its volume, by a pump assembly 70, to the assembly of water solution/air saturators, and it is used to supply the third curtain 40b of micron-bubbles of the installation.

With all the equipment of the installation for the removal of pollutant materials and/or substances mounted in the water stream to be treated, the sequence of the dynamic treatment of such water streams can be defined by: a line of air diffusers 10 disposed on the bottom F and transversal to the water stream 1, simultaneously promoting the aeration and revolving of the material on the bottom F of the water stream 1 thus causing same to float, in such a way that the floated material RG is dragged and collected downstream by a floating net or waste collecting net 20, disposed substantially transversal to the water stream 1, wherein the coarse residues RG are removed from the water stream 1. Downstream and at a certain distance from said waste collecting net 20, the transversal suspended metallic structure 30 supports the injection curtains 40, 40a, 40b disposed spaced apart and sandwiched between the homogenization diffusers 50. The first curtain 40 is responsible for the injection of coagulants that shall promote the agglutination of the suspended fine particles; while the second curtain 40a is responsible for the injection of polymers that shall promote the aggregation of coagulated particles, thus forming small flakes in the water stream 1, thus making it possible to provide a flocculation length from this portion on along the water stream 1. The aggregation of such suspended flocculated particles takes place downstream, defining flakes of larger sizes, in such a way that the water stream 1 is subjected, to the third injection curtain 40b from said point on wherein a micro-aeration is carried out, causing the flotation of said flocculated aggregated particles. Thus, from said point on, a flotation length MF is defined that drags the floated material or mud L formed on the surface of the water stream 1, which is carried by flexible longitudinal barriers 13, to the transversal dragging alignment 60 that promotes a concentration of floated material F and its removal to an intake box, thus making it possible to remove said material from the water stream 1 by being pumped to a restricted area remote from the water stream 1, where it is temporarily stored to be dehydrated and recycled as a by-product later on, depending on the composition thereof.

It should be pointed out that the stage of dilution and air injection 40b is basically comprised of a water pumping unit 70 connected the air compressors and mixers. The flow rate of the water required to be injected with the micro-sprayed air is of the order of 5 to 20% of the flow rate existing in the water stream 1. For the supply of the required water for the system, equipment provided with suction pumps shall be used as well as settlings with a flow rate enough to allow for the optimum dosage of the mixture.

Just like in the case of the air diffusers 10, a mixture of water and dissolved air is directed_to a pipe provided with nozzles transversally installed all over the extension of the bottom of the canal, thus allowing the dissolved air to escape and be homogeneously distributed. This mixture is composed of air micro-bubbles that adhere to the aggregated particles, increasing its thrust, thus making it possible to carry out the flotation process MF.

Considering that remains of non-collected solid residues can occur in addition to the floated mud L, it is advisable that said removed floated material L pass through a device that can control same, by separating the mud L, in order to remove the larger sized residues, thus minimizing the interferences in the process of treating the mud L.

Although a particularly preferred installation design has been described and illustrated, it should pointed out that alterations and adequacies to equipment and components are possible and foreseeable without departing from the scope of the present invention.

## Claims

1. An installation for the removal of pollutant materials and/or substances contained in water streams, comprising the sequential implantation of: a line of air diffusers (10) disposed on the bottom of the water stream and transversal thereto (1), for simultaneously promoting the aeration and the revolving of the water stream and also the flotation of the coarse residues (RG) that are dragged and then collected downstream by a floating waste collecting net, said waste collecting net (20) being disposed substantially transversal to the water stream, for removing the coarse residues (RG) from the water stream (1); downstream and at a certain distance of said waste collecting net (20) a suspended structure metallic (30) is disposed transversal to the water stream (1) on which at least three injection curtains (40, 40a, 40b) are mounted that are selectively and automatically actuated, spaced apart and sandwiched between homogenization diffusers (50), the first curtain (40) being responsible for the injection of coagulants; the second curtain (40a) being responsible for the injection of polymers in the water stream (1) to be treated, for creating a flocculation length in said water stream (1) which is subjected to the third curtain of injection (40b) responsible for the micro-aeration, for subjecting such aggregated particles and those of larger sizes to at least a stage of supersaturated dissolution of water/air that when depressurized set micro-bubbles free, for causing the flotation of such aggregated particles; therefore providing a flotation length (MF) in said water stream, in such a way that a surface agglomeration of the floated material takes place downstream and is carried along by longitudinal flexible barriers (13) comprised of synthetic membranes to a transversal dragging alignment (60) comprised of a plurality of dragging modules (61) that extend over the whole width of the water stream (1), for promoting the concentration of said floated material (L) and the removal thereof to an intake box (63), for making it possible to pump said removed material of the water stream (1) to a restricted area remote from the water stream (1), where it is temporarily stored to be dehydrated and recycled as a by-product later on, depending on the composition thereof.

2. An installation for the removal of pollutant materials and/or substances contained in water streams according to claim 1, **characterized in that** the line of air diffusers (10) is comprised of a submerged perforated pipe (11) disposed transversal to the polluted water stream (1), said submerged pipe (11) extending from one bank (2) to the other of said water stream (1), thus providing over the whole extension thereof a plurality of ejecting nozzles responsible for the controlled outlet of the pressurized air coming from a compressed air tank (12) existing on the banks (2) of the water stream (1).

3. An installation for the removal of pollutant materials and/or substances contained in water streams according to claim 1 or 2, **characterized in that** the floating net (20), called waste collecting net, has a length that is higher than the width of the water stream (1), being flexibly extended between the banks (2) of this later, thus allowing for the formation of an arched belt on the surface of the water stream (1) for retaining and carrying coarse residues to one of the banks (2) of said water stream (1) wherein such residues or dejects are removed from the water stream (1); said floating net (20) also serving as a passageway for the installation operators to cross from a bank (2) to another over the water stream (1).

4. An installation for the removal of pollutant materials and/or substances contained in water streams according to claim 1 or 2 or 3, **characterized in that** the suspended metallic structure (30) is comprised of a plurality of upright beams (31) rigidly mounted on vertical columns (32) rigidly disposed or movable along the dry portion of the banks (2) of said water stream (1); said suspended structure (30) having each upright beam (31) supported between the respective vertical columns (32) by means of tensioning cables (33) that are anchored to rigid masonry blocks (34) provided on the edges (2) of the water stream (1), in such a way that said beam (31) remains parallel to the surface of the water stream (1) and at a height not to prevent the passage of boats having a size consistent with the navigability of the water stream (1).

5. An installation for the removal of pollutant materials and/or substances contained in water streams according to claim 1 or 4, **characterized in that** the suspended structure (30) is of the mobile type through the provision of casters disposed at the base of the vertical columns (32) that slide on guide tracks provided longitudinally beside the dry portion of the banks (2) of the water stream (1), for making it possible to regulate the distances between the injection line (40,40a, 40b) mounted on the suspended structures (30).

6. An installation for the removal of pollutant materials and/or substances contained in water streams according to claim 1 or 2 or 3 or 4 or 5. **characterized in that** each of the beams (31) defines a passageway on which a corresponding curtain of injection (40 or 40a or 40b) is mounted that is comprised of a set of injection pumps (41), relief valves (42) and extensible flexible hoses (43) and rising assemblies (44,45), said hoses (43) being selectively displaced downward until its lower end or outlet (43a) reaches the bottom (F) of the water stream (1).

7. An installation for the removal of pollutant materials and/or substances contained in water streams according to claim 1 or 6, **characterized by** a manually operated or automatic roller follower (44) that, by means of steel handles (45), selectively moves each injection line (43) up and down.

8. An installation for the removal of pollutant materials and/or substances contained in water streams according to claim 1 or 2 or 3 or 4 or 5 or 6 or 7, **characterized in that** the transversal dragging alignment (60) that is comprised of a plurality of dragging modules (61) connected to one another and retained on the banks (2) of the water stream (1) through steel handles (60a) is provided with rotating drags (62) that carry the mud (L) to the respective intake boxes (63) of the aligned dragging modules (61) which are connected to one another by a suction pipe (64) that pumps the mud (L) removed or dragged from the water stream (1) to the restricted area remote from water stream (1).

9. An installation for the removal of pollutant materials and/or substances contained in water streams according to claim 1 or 2 or 3 or 4 or 5 or 6 or 7 or 8, **characterized in that** a pump assembly (70) is provided downstream the transversal dragging alignment (60) for pumping a volume of unpolluted water (AD) to the micro-aeration assembly that is used to supply the third micro-aeration curtain (40b) of the installation.

## Patentansprüche

1. Vorrichtung zur Entfernung von Schmutzstoffen und/oder Schadstoffen, die in Wasserströmen enthalten sind, umfassend die nacheinander erfolgende Einführung von:
einer Reihe von Luftverteilern (10), die auf dem Boden des Wasserstroms und quer dazu angeordnet sind (1), um gleichzeitig die Belüftung und die Umwälzung des Wasserstroms und ebenfalls das Schweben der groben Reststoffe (RG) zu fördern, die mitgebaggert werden und dann stromabwärts von einem schwebenden Abfallsammelnetz gesammelt werden, wobei das Abfallsammelnetz (20) im Wesentlichen quer zu dem Wasserstrom angeordnet ist, um die groben Reststoffe (RG) aus dem Wasserstrom (1) zu entfernen; stromabwärts und in einem bestimmten Abstand zu dem Abfallsammelnetz (20) ist eine hängende Metallkonstruktion (30) quer zu dem Wasserstrom (1) angeordnet, auf welcher mindestens drei Einspritzschleier (40, 40a, 40b) angebracht sind, die wahlweise und automatisch betätigt werden, die wischen Homogenisierungsverteilern (50) mit Abstand angeordnet und eingeschoben sind, wobei der erste Schleier (40) für die Einspritzung von Flockungsmitteln zuständig ist und der zweite Schleier (40a) zuständig ist für die Einspritzung von Polymeren in den zu behandelnden Wasserstrom (1), für die Schaffung einer Flockungsstrecke in dem Wasserstrom (1), die dem dritten Einspritzschleier (40b) unterliegt, der für die Mikrobelüftung zuständig ist, für die Unterwerfung derartiger angehäufter Partikel und größerer Partikel mindestens einer Phase der übersättigten Wasser/Luft-AbLösung, die bei Druckentlastung Mikroblasen freisetzt, um das Schweben der angehäuften Partikel zu bewirken; zu diesem Zweck wird eine Schwebstrecke (MF) in dem Wasserstrom derart vorgesehen, dass stromabwärts eine Anhäufung der Schwebstoffe an der Oberfläche erfolgt und durch längliche flexible Barrieren (13), die synthetischen Membranen enthalten, zu einer quer verlaufenden Baggervorrichtung (60) transportiert wird, die mehreren Baggermodulen (61) enthält, die sich über die gesamte Breite des Wasserstroms (1) erstrecken, um die Konzentration der Schwebstoffe (L) und deren Entfernung zu einer Ansaugbox (63) zu fördern, um es zu ermöglichen, die entfernten Stoffe aus dem Wasserstrom (1) zu einem begrenzten Bereich zu pumpen, der sich fern von dem Wasserstrom (1) befindet, wo sie vorübergehend gelagert werden, um entwässert und später als Beiprodukt wieder verwendet zu werden, je nach deren Zusammensetzung.

2. Vorrichtung zur Entfernung von Schmutzstoffen und/oder Schadstoffen, die in Wasserströmen enthalten sind, nach Anspruch 1, **dadurch gekennzeichnet, dass** die Reihe den Luftverteilern (10) einen perforierten Unterwasserrohr (11) enthält, das quer zu dem verschmutzten Wasserstrom (1) angeordnet ist, wobei sich das Unterwasserrohr (11) von einem Ufer (2) zum anderen Ufer des Wasserstroms (1) erstreckt und somit über die gesamte Ausdehnung mehrere Ausblasdüsen vorgesehen sind, die für den kontrollierten Auslass der Druckluft, die aus einem Druckluftbehälter (12) kommt, der auf den Ufern (2) des Wasserstroms (1) vorhanden ist, zuständig sind.

3. Vorrichtung zur Entfernung von Schmutzstoffen und/oder Schadstoffen, die in Wasserströmen enthalten sind, nach Anspruch 1 oder 2, **dadurch gekennzeichnet, dass** das Schwebenetz (20), das Abfallsammelnetz genannt wird, eine Länge aufweist, die größer ist als die Breite des Wasserstroms (1), und es sich flexibel zwischen den Ufern (2) des Letzteren erstreckt und somit die Bildung eines gebogenen Bandes auf der Oberfläche des Wasserstroms (1) ermöglicht, um grobe Reststoffe zurückzuhalten und zu einem der Ufer (2) des Wasserstroms (1) zu transportieren, wodurch diese Reststoffe oder Ablagerungen aus dem Wasserstrom (1) entfernt werden; wobei das Schwebenetz (20) ebenfalls als Durchgang für das Bedienpersonal der Vorrichtung dient, um von einem Ufer (2) zu dem anderen über den Wasserstrom (1) zu gelangen.

4. Vorrichtung zur Entfernung von Schmutzstoffen und/oder Schadstoffen, die in Wasserströmen enthalten sind, nach Anspruch 1 oder 2 oder 3, **dadurch gekennzeichnet, dass** die hängende Metallkonstruktion (30) mehrere aufgerichtete Balken (31) enthält, die fest auf Vertikalständer (32) angebracht sind, diestarr oder beweglich entlang des trockenen Abschnitts der Ufer (2) des Wasserstroms (1) angeordnet sind; wobei bei der hängenden Konstruktion (30) jeder aufgerichtete Balken (31) zwischen den jeweiligen Vertikalständer (32) mit Hilfe von Spannkabeln (33) gehalten wird, die an Mauerblöcken (34) verankert sind, die dergestalt an den Rändern (2) des Wasserstroms (1) vorgesehen sind, dass der Balken (31) parallel zu der Oberfläche des Wasserstroms (1) und in einer Höhe bleibt, dass die Durchfahrt von Booten nicht verhindert wird, die eine Größe aufweisen, die mit der Schiffbarkeit des Wasserstroms (1) vereinbar ist.

5. Vorrichtung zur Entfernung von Schmutzstoffen und/oder Schadstoffen, die in Wasserströmen enthalten sind, nach Anspruch 1 oder 4, **dadurch gekennzeichnet, dass** die hängende Konstruktion (30) aufgrund des Vorhandenseins von Laufrollen, die am Boden der Vertikalständer (32) angeordnet sind, die auf Führungsbahnen gleiten, welche längs neben dem trockenen Abschnitt der Ufer (2) des Wasserstroms (1) angeordnet sind, mobiler Art ist, um es zu ermöglichen, die Abstände wischen der Einspritzreihe (40, 40a, 40b), die auf den hängenden Konstruktionen (30) angebracht ist, zu regulieren.

6. Vorrichtung zur Entfernung von Schmutzstoffen und/oder Schadstoffen, die in Wasserströmen enthalten sind, nach Anspruch 1 oder 2 oder 3 oder 4 oder 5, **dadurch gekennzeichnet, dass** jeder der Balken (31) einen Durchgang festlegt, auf dem ein entsprechender Einspritzschleier (40 oder 40a oder 40b) angebracht ist, der aus einem Satz von Einspritzpumpen (41), Entlastungsventilen (42) und dehnbaren flexiblen Schläuchen (43) und Steigteilen (44, 45) besteht, wobei die Schläuche (43) wahlweise nach unten verlagert werden, bis ihr unteres Ende oder Auslass (43a) den Boden (F) des Wasserstroms (1) erreicht.

7. Vorrichtung zur Entfernung von Schmutzstoffen und/oder Schadstoffen, die in Wasserströmen enthalten sind, nach Anspruch 1 oder 6, **gekennzeichnet durch** eine manuell betriebene oder automatische Stützrolle (44), die mit Hilfe von Stahlgriffen (45) jede Einspritzreihe (43) wahlweise nach oben und nach unten bewegt.

8. Vorrichtung zur Entfernung von Schmutzstoffen und/oder Schadstoffen, die in Wasserströmen enthalten sind, nach Anspruch 1 oder 2 oder 3 oder 4 oder 5 oder 6 oder 7, **dadurch gekennzeichnet, dass** die quer verlaufende Baggervorrichtung (60), die mehreren Baggermodulen (61) enthält, die miteinander verbunden sind und auf den Ufern (2) des Wasserstroms (1) durch Stahlgriffe (60a) festgehalten werden, mit rotierenden Baggern (62) versehen ist, die den Schlamm (L) zu den jeweiligen Ansaugboxen (63) der in einer Linie angeordneten Baggermodulen (61) transportieren, die untereinander über ein Saugrohr (64) verbunden sind, das den aus dem Wasserstrom (1) entfernten oder entzogenen Schlamm (L) zu dem beschränkten Bereich pumpt, der sich von dem Wasserstrom (1) entfernt befindet.

9. Vorrichtung zur Entfernung von Schmutzstoffen und/oder Schadstoffen, die in Wasserströmen enthalten sind, nach Anspruch 1 oder 2 oder 3 oder 4 oder 5 oder 6 oder 7 oder 8, **dadurch gekennzeichnet, dass** eine Pumpengruppe (70)unterhalb der quer verlaufenden Baggeranordnung (60) vorgesehen ist, um eine Menge an nicht verschmutztem Wasser (AD) zu der Mikrobelüftungsgruppe zu pumpen, die verwendet wird, um den dritten Mikrobelüftungsschleier (40b) der Vorrichtung zu versorgen.

## Revendications

1. Installation d'extraction de matériaux et/ou substances polluantes contenus dans des courants d'eau comprenant, l'implémentation séquentielle de : une ligne de diffuseurs d'air (10) placés au fond du courant d'eau (1) et transversale à celui-ci, pour promouvoir simultanément l'aération et la rotation du courant d'eau et également la flottaison des résidus grossiers (RG) qui sont dragués et ensuite recueillis en aval par un filet flottant de capture des déchets, ledit filet de capture de déchets (20) étant disposé sensiblement transversalement au courant d'eau, pour enlever les résidus grossiers (RG) du courant d'eau (1) ; en aval et à une certaine distance dudit filet de capture de déchets (20) une structure (30) métallique suspendue est disposée transversalement au courant de l'eau (1) sur laquelle sont montés au moins trois rideaux d'injection (40, 40a, 40b) qui sont actionnés sélectivement et automatiquement, séparés l'un de l'autre et pris en sandwich entre des diffuseurs d'homogénéisation (50), le premier rideau (40) assurant l'injection de coagulants, le deuxième rideau (40a) assurant l'injection de polymères dans le courant d'eau (1) destiné à être traité, pour la création d'une longueur de floculation dans ledit courant d'eau (1) qui est soumise au troisième rideau d'injection (40b) assurant la micro-aération, pour soumettre de telles particules agrégées et celles de taille plus importante à au moins une étape de dissolution super-saturée d'eau/air qui, lorsque dépressurisé, dégage des micro-bulles pour provoquer la flottation de telles particules agrégées ; fournissant ainsi une longueur de flottation (MF) dans ledit courant d'eau d'une façon telle qu'une agglomération superficielle du matériau rendu flottant se produit en aval et est transporté par des barrières flexibles longitudinales (13) comprenant des membranes synthétiques jusqu'à un alignement transversal de dragage (60) comprenant une pluralité de modules de dragage (61) s'étendant sur toute la largeur du courant d'eau (1), pour promouvoir la concentration dudit matériau rendu flottant (L) et son enlèvement vers une enceinte d'admission (63) pour rendre possible le pompage dudit matériau enlevé du courant d'eau (1) vers une zone restreinte éloignée du courant d'eau (1) où il est stocké temporairement pour être déshydraté et recyclé plus tard en tant que sous-produit en fonction de sa composition.

2. Installation d'extraction de matériaux et/ou substances polluantes contenus dans des courants d'eau selon la revendication 1, **caractérisée en ce que** la ligne de diffuseurs d'air (10) comprend un tuyau perforé submergé (11) disposé transversalement au courant d'eau pollué (1), ledit tuyau submergé (11) s'étendant d'une rive (2) à l'autre dudit courant d'eau (1), fournissant ainsi sur toute l'extension de celui-ci une pluralité de buses d'éjection assurant l'évacuation contrôlée de l'air pressurisé venant d'un réservoir d'air comprimé (12) présent sur les rives (2) du courant d'eau (1).

3. Installation d'extraction de matériaux et/ou substances polluantes contenus dans des courants d'eau selon la revendication 1 ou 2, **caractérisée en ce que** le filet flottant (20), appelé filet de collecte des déchets, a une longueur qui est supérieure à la largeur du courant d'eau (1), en étant étendu de façon flexible entre les rives (2) de celui-ci, permettant ainsi la formation d'une ceinture arquée sur la surface du courant d'eau (1) pour la rétention et le transport de résidus grossiers vers l'une des rives (2) dudit courant d'eau (1) où ces résidus ou déchets sont retirés du courant d'eau (1); ledit filet flottant (20) servant aussi comme passage pour les exploitants de l'installation les permettant de passer d'une rive (2) à l'autre par-dessus le courant d'eau (1).

4. Installation d'extraction de matériaux et/ou substances polluantes contenus dans des courants d'eau selon la revendication 1 ou 2 ou 3, **caractérisée en ce que** la structure suspendue métalliques (30) est composée d'une pluralité de poutres droites (31) montées rigidement sur des colonnes verticales (32) disposées rigidement ou mobiles le long de la partie sèche de la rive (2) dudit courant d'eau (1) ; chacune des poutres droites (31) de ladite structure suspendue (30) étant supportée entre les colonnes verticales respectives (32) au moyen de câbles de mise sous tension (33) qui sont ancrés à des blocs de maçonnerie rigide (34) fournis sur les rives (2) du courant d'eau (1), de telle sorte que ladite poutre (31) reste parallèle à la surface du courant d'eau (1) et à une hauteur telle qu'elle n'empêche pas le passage des bateaux ayant une taille compatible avec la navigabilité du courant d'eau (1).

5. Installation d'extraction de matériaux et/ou substances polluantes contenus dans des courants d'eau selon la revendication 1 ou 4, **caractérisée en ce que** la structure suspendue (30) est du type mobile grâce à la fourniture de roulettes disposées à la base des colonnes verticales (32) qui glissent sur des rails de guidage ménagés longitudinalement à côté de la partie sèche des rives (2) du courant d'eau (1), rendant ainsi possible de régler les distances entre la ligne d'injection (40, 40a, 40b) montée sur les structures suspendues (30).

6. Installation d'extraction de matériaux et/ou substances polluantes contenus dans des courants d'eau selon la revendication 1 ou 2 ou 3 ou 4 ou 5, **caractérisée en ce que** chacune des poutres (31) définit un passage sur lequel un rideau correspondant d'injection (40 ou 40a ou 40b) est monté et qui comprend un ensemble de pompes d'injection (41), de valves de surpression (42) et de tuyaux flexibles extensibles (43) et des ensembles montants (44, 45), lesdits tuyaux (43) étant sélectivement déplacés vers le bas jusqu'à ce que leur extrémité inférieure ou de sortie (43a) atteint le fond (F) du courant d'eau (1).

7. Installation d'extraction de matériaux et/ou substances polluantes contenus dans des courants d'eau selon la revendication 1 ou 6, **caractérisée par** un dispositif suiveur à rouleaux (44) actionné manuellement ou automatiquement qui, au moyen de poignées en acier (45), déplace de manière sélective ladite ligne d'injection (43) vers le haut et vers le bas.

8. Installation d'extraction de matériaux et/ou substances polluantes contenus dans des courants d'eau selon la revendication 1 ou 2 ou 3 ou 4 ou 5 ou 6 ou 7, **caractérisée en ce que** l'alignement transversal de dragage (60) qui comprend une pluralité de modules de dragage (61) connectés les uns aux autres et retenus sur les rives (2) du courant d'eau (1) grâce à des poignées en acier (60a) est muni d'éléments de dragage rotatifs (62) transportant la boue (L) vers les enceintes d'admission respective (63) des modules de dragage alignés (61) qui sont reliés l'un à l'autre par un tuyau d'aspiration (64) qui pompe la boue (L) enlevée ou retirée par dragage du courant d'eau (1) à la zone restreinte éloignée du courant d'eau (1).

9. Installation d'extraction de matériaux et/ou substances polluantes contenus dans des courants d'eau selon la revendication 1 ou 2 ou 3 ou 4 ou 5 ou 6 ou 7 ou 8, **caractérisée en ce qu'**un assemblage de pompe (70) est fourni en aval de l'alignement transversal de dragage (60) pour le pompage d'un volume d'eau non-polluée (AD) à l'assemblage de micro-aération qui est utilisé pour alimenter le troisième rideau de micro-aération (40b) de l'installation.
